# EUROPÄISCHE PATENTSCHRIFT

(11) **EP 3 207 567 B1**
(45) Veröffentlichungstag und Bekanntmachung des Hinweises auf die Patenterteilung: **12.12.2018**
(21) Anmeldenummer: 15778262.4
(22) Anmeldetag: 07.10.2015
(51) Int. Cl.: H02K 11/33, H02K 5/20, H02K 9/19, H01L 23/473

(54) **ANTRIEBSVORRICHTUNG FÜR EINEN KRAFTFAHRZEUGANTRIEBSSTRANG**
TRACTION DEVICE FOR THE DRIVE TRAIN OF A MOTOR VEHICLE
DISPOSITIF D'ENTRAÎNEMENT POUR UNE TRANSMISSION DE VÉHICULE AUTOMOBILE

(30) Priorität: 15.10.2014 DE 102014220835
(43) Veröffentlichungstag der Anmeldung: 23.08.2017
(73) Patentinhaber: ZF Friedrichshafen AG, 88046 Friedrichshafen (DE)
(72) Erfinder: CUDOK, Matthias, 98617 Ritschenhausen (DE)
(86) Internationale Anmeldenummer: PCT/EP2015/073079
(87) Internationale Veröffentlichungsnummer: WO 2016/058870

(56) Entgegenhaltungen:
- DE-A1-102006 000 732
- DE-A1-102012 112 923
- GB-A- 1 227 747
- US-A- 5 424 593
- US-A1- 2012 153 718

## Beschreibung

Vorliegende Erfindung betrifft eine Antriebsvorrichtung für einen Kraftfahrzeugantriebsstrang gemäß dem Oberbegriff von Patentanspruch 1.

Aus dem Stand der Technik, beispielsweise der DE 101 20 414, ist eine als Außenläufer ausgebildete elektrische Maschine für eine Lichtmaschine oder einen Starter-Generator bekannt, bei der zumindest Teile einer die elektrische Maschine ansteuernden Leistungselektronik bezüglich einer Drehachse D der elektrischen Maschine radial innenliegend des Stators angeordnet sind. Dadurch kann eine elektrische Maschine mit einer besonders kompakten Bauweise bereitgestellt werden, die nur einen geringen Platzbedarf aufweist.

Nachteilig an diesem Stand der Technik ist jedoch, dass bei einer hohen Leistungsaufnahme, beispielweise bei einer Verwendung der elektrischen Maschine als Antriebsvorrichtung im rein elektrischen Fahrbetrieb, eine sehr große Wärmeentwicklung in der elektrischen Maschine und auch der Leistungselektronik auftritt, die einer effektiven Kühlung bedarf. Die in der DE 101 20 414 offenbarte Kühlung über eine radial verlaufende Kondensatorbodenplatte und eine Kühlung im Statorträger ist dabei nicht ausreichend. Ist zudem die elektrische Maschine als Innenläufer ausgebildet, steht die Kühlung am Statorträger für die Leistungselektronik nicht zur Verfügung. Die Leistungselektronik muss dann separat gekühlt werden oder radial außerhalb des Stators angeordnet werden, was sehr viel Bauraum beansprucht.

Die US 2012/0153718 A1 offenbart eine Antriebsvorrichtung für ein elektrisch angetriebenes Fahrzeug mit einer als Innenläufer ausgebildeten Elektromaschine, einem Getriebe und mit einer Leistungselektronik zum Ansteuern der Elektromaschine, wobei letztere auf einem ebenen plattenförmigen Leistungselektronikträgerabschnitt angeordnet ist. Die genannten Komponenten sind in der genannten Reihenfolge axial zueinander gestaffelt. Zur Abführung einer Verlustwärme von diesen Komponenten ist ein gemeinsamer Fluidkühlkreislauf vorgesehen.

Die DE 10 2006 000 732 A1 beschreibt eine Generator-Elektromotor-Kombination mit einem Generator-Rotor, einem Elektromotor-Rotor und mit einem zu diesen axial verschiebbar angeordneten und dazu radial innenliegenden hohlzylindrischen Stator mit einer Statorwicklung. Diese Wicklung wird mittels einer an der Innenumfangsfläche des Statorträgers festgelegten Leistungselektronik angesteuert. Zur Kühlung von Halbleiterelementen der Leistungselektronik sind am Statorträger fluiddurchströmbare Kühlelemente vorgesehen, welche mit in der Wandung des Statorträgers ausgebildeten Kühlmittelkanälen einen gemeinsamen Kühlmittelkreislauf bilden.

Aufgabe vorliegender Erfindung ist es deshalb, eine Antriebsvorrichtung mit einer elektrischen Maschine als Antriebsaggregat für einen Kraftfahrzeugantriebsstrang bereitzustellen, die zum einen wenig Bauraum benötigt und zum anderen eine effektive Abfuhr einer beim Betreiben der elektrischen Maschine anfallenden Verlustwärme gewährleistet.

Diese Aufgabe wird durch eine Antriebsvorrichtung für einen Kraftfahrzeugantriebsstrang gemäß Patentanspruch 1 gelöst. Vorteilhafte Ausgestaltungen und Weiterbildungen der Erfindung gehen aus den abhängigen Ansprüchen, der Beschreibung und den Zeichnungen hervor.

Vorliegend wird eine Antriebsvorrichtung für einen Kraftfahrzeugantriebsstrang vorgeschlagen, wobei die Antriebsvorrichtung als eine elektrische Maschine mit einem um eine Achse A drehbar gelagerten Rotor und einem dazu koaxial angeordneten Stator ausgebildet ist. Dabei weist der Rotor eine elektromagnetische Rotorkomponente und einen Rotorträger auf, während der Stator einen Statorträger aufweist, der rotorseitig eine elektromagnetische Statorkomponente trägt. Um sowohl ein platzsparendes Antriebsaggregat auszubilden als auch für einen ausreichenden Wärmeabtransport zu sorgen, weist die Antriebsvorrichtung weiterhin einen zylinderförmig ausgebildeten Systemträger auf, der einen sich radial erstreckenden Radialwandabschnitt umfasst, und der einen ersten sich axial erstreckenden Statorträgerabschnitt, der den Statorträger ausbildet, und zumindest einen zweiten sich axial erstreckenden Leistungselektronikträgerabschnitt, der einen Aufnahmebereich für eine Elektronikbaugruppe zum Ansteuern der elektrischen Maschine ausbildet, aufweist. Dieser Systemträger ist einteilig gefertigt und weist weiterhin eine erste Fluid-Kühlanordnung auf, die mit der elektromagnetischen Statorkomponente im Wärmeaustauschkontakt steht und zumindest eine zweite, von der ersten Fluid-Kühlanordnung separat ausgebildete Fluid-Kühlanordnung, die wiederum mit der Elektronikbaugruppe im Wärmeaustausch steht. Dieser Systemträger ermöglicht zum einen eine bauraumsparende Ausgestaltung und zum anderen über die separat ausgebildeten Fluid-Kühlanordnungen für Statorträger und Leistungselektronik eine effektive Kühlung der sich im Betrieb erhitzenden Komponenten.

Dadurch, dass sowohl die elektromagnetische Statorkomponente als auch die Elektronikbaugruppe mit eigenständigen Fluid-Kühlanordnungen im Wärmeaustausch stehen, kann die Verlustwärme besser abgeführt werden. Der Wärmeaustauschkontakt kann beispielsweise dadurch erfolgen, dass ein zumindest mittelbarer Anlagekontakt zwischen der Elektronikbaugruppe, beispielsweise einem Bauelementgehäuse oder einem diesem zugeordneten Kühlkörper und einer Fläche des Leistungselektronikabschnitts ausgebildet ist. Dabei können zwischen den genannten Elementen Wärmeübertragungsmittel zur Verbesserung des Wärmetransports, wie zum Beispiel eine Wärmeleitpaste oder wärmeleitende Folien oder Platten oder dergleichen sandwichartig eingelegt sein. Alternativ und/oder zusätzlich kann ein Wärmeaustauschkontakt auch durch Wärmestrahlung oder durch Konvektion der erwärmten Umgebungsluft, welche gegebenenfalls durch eine Lüfteranordnung erzwungen werden kann, stattfinden. Analog gilt das auch für den Wärmeaustauschkontakt des Statorträgerabschnitts.

Gemäß der Erfindung ist die elektrische Maschine als Innenläufer ausgeführt. Dabei sind der Rotor und der Stator in einem am Systemträger zwischen Statorträgerabschnitt und dem Leistungselektronikträgerabschnitt ausgebildeten ringförmigen ersten Aufnahmeraum angeordnet, wobei Statorträgerabschnitt und Leistungselektronikträgerabschnitt über den Radialwandabschnitt radial voneinander beabstandet sind. Dadurch wird radial innerhalb des Rotors von dem sich axial erstreckenden Leistungselektronikträgerabschnitt ein Raum geschaffen, der für die Aufnahme einer Elektronikbaugruppe ausgebildet ist. Vorzugsweise ist dabei dieser Aufnahmeraum radial innerhalb des Leistungselektronikträgerabschnitts ausgebildet, so dass die darin angeordnete Elektronikbaugruppe nicht von der Bewegung des Rotors beeinträchtigt ist.

Zudem hat diese Ausgestaltung den Vorteil, dass die von der dem Leistungselektronikträgerabschnitt zugeordneten zweiten Fluid-Kühlanordnung bereitgestellte Kühlung auch auf die Rotorkomponenten einwirken kann. Prinzipiell wäre es aber auch möglich, neben dem Stator und dem Rotor auch die Elektronikbaugruppe in dem ersten Aufnahmeraum anzuordnen und den Leistungselektronikträgerabschnitt als radiale Innenbegrenzung auszugestalten.

Wie weiter unten noch genauer beschrieben, kann vorzugsweise die radiale Innenbegrenzung eine Zentralausnehmung definieren, in der wiederum bevorzugt eine Trennkupplung, insbesondere eine elektromagnetisch betätigbaren Formschlusskupplung, z.B. einer Klauenkupplung, wie in der DE 102013205174 beschrieben, aufgenommen sein kann. Für die genaue Ausgestaltung der Klauenkupplung wird auf die genannte Druckschrift verwiesen, deren Offenbarungsgehalt hierin vollumfänglich umfasst ist.

Gemäß einem weiteren Merkmal der Erfindung ist in dem Radialwandabschnitt des Systemträgers mindestens ein Kühlmittelzufuhrkanal, der Kühlmittel zu der ersten und/oder zweiten Fluid-Kühlanordnung führt, und mindestens ein Kühlmittelabfuhrkanal, der Kühlmittel aus der ersten und/oder zweiten Fluid-Kühlanordnung führt, ausgebildet. Dabei können für jede Fluid-Kühlanordnung separate Kühlmittelzufuhr- und Abfuhrkanäle vorgesehen sein, ist es jedoch auch möglich, einen zentralen Kühlmittelzufuhrkanal und einen zentralen Kühlmittelabfuhrkanal auszubilden, die das Kühlmittel in die entsprechenden Fluid-Kühlanordnungen verteilen.

Bei getrennten Kühlmittelzufuhr-/-abfuhrkanälen liegt der Vorteil darin, dass die Elektronikbaugruppe und die elektromagnetischen Statorkomponenten mit Kühlmitteln unterschiedlicher Temperatur gekühlt werden können, so dass eine besonders effektive Kühlung bereitgestellt werden kann. Dazu können zudem jeweils entsprechende Einlass- und Auslassöffnungen vorgesehen sein.

Gemäß einem bevorzugten Ausführungsbeispiel weist der Aufnahmeraum für die Elektronikbaugruppen weiterhin eine in dem Radialwandabschnitt, auf einer der elektrischen Maschine abgewandten axialen Stirnseite, ausgebildete Ausnehmung auf, in der beispielsweise eine Netzteilplatte (Powerboard) für die Leistungselektronik aufnehmbar ist. Dadurch kann an dem Systemträger nicht nur ein radial innenliegender koaxial zum Rotor ausgebildeter Aufnahmeraum ausgebildet werden, sondern auch gleichzeitig ein Aufnahmeraum für das Powerboard bereitgestellt werden, so dass eine besonders kompakte Bauweise möglich ist.

Das Powerboard selbst kann vorzugsweise schwingungsentkoppelt in der sich radial erstreckenden Aufnahmetasche befestigt sein. Für eine derartige schwingungsentkoppelte Befestigung sind insbesondere Schrauben mit Pufferelement bevorzugt, wie sie beispielsweise in der EP 1746294 beschrieben sind. Für eine genaue Beschreibung wird auf die EP 1746294 verwiesen.

Weiterhin trägt das Powerboard üblicherweise die Kondensatoren und andere Bauteile der Leistungselektronik, wobei diese Elemente derart angeordnet sind, dass sie in den vom Leistungselektronikträger ausgebildeten Aufnahmebereich hineinragen, so dass eine Kühlung der Bauteile stattfindet.

Dabei ist weiterhin bevorzugt, wenn weitere auf dem Powerboard angeordnete Elemente, wie beispielsweise Halbleiter (MOSFETs) über eine Wärmeleitpaste (Gapfiller), die zwischen dem Powerboard und einer Stirnseite des Leistungselektronikträgers angeordnet ist, in Wärmeaustauschkontakt mit der zweiten Fluid-Kühlanordnung stehen. Zur verbesserten Wärmeübertragung kann auch eine Stirnseite der im Aufnahmeraum aufgenommenen Elektronikbaugruppe, insbesondere eine Stirnseite des Kondensators, über einen Gapfiller thermisch mit dem Leistungselektronikträgerabschnitt verbunden sein. Zudem kann durch eine geeignete Materialwahl des Leistungselektronikträgers, beispielsweise aus einem besonders wärmeleitfähigem Material wie Alu, dafür gesorgt werden, dass die Wärme besser abtransportiert wird.

Gemäß einem weiteren vorteilhaften Ausführungsbeispiel ist die erste Fluid-Kühlanordnung als ein im Statorträgerabschnitt ausgebildeter erster sich in Umfangsrichtung erstreckender ringförmiger Kanalabschnitt ausgebildet, der vorzugsweise radial außerhalb der elektromagnetischen Statorkomponenten angeordnet ist. Durch die im Statorträgerabschnitt angeordnete Kühlanordnung kann direkt Kühlmittel an die elektromagnetischen Statorkomponenten in Wärmeaustauschkontakt gebracht werden. Dadurch kann eine besonders effektive Kühlung des Stators erfolgen. Der Kühlmittelkanal selbst kann dabei einteilig im Statorträgerabschnitt oder mehrteilig zusammengebaut ausgebildet werden, wobei beispielsweise bei einem zweiteiligen Kühlmittelkanal der Kühlmittelkanal von dem Statorträger und einem die elektrische Maschine umgebenden Gehäuse gebildet werden kann. Bei einteiligen Kühlkanälen ist der Statorträger selbst hohl ausgeführt und dazu ausgelegt, ein Kühlmedium aufzunehmen.

Analog zu der ersten Fluid-Kühlanordnung kann auch die zweite Fluid-Kühlanordnung als ein im Leistungselektronikträgerabschnitt ausgebildeter zweiter, sich in Umfangsrichtung erstreckender, ringförmiger Kanalabschnitt ausgebildet sein. Dieser ist vorzugsweise radial zwischen der elektrischen Maschine und der Leistungselektronik angeordnet. Durch die Anordnung der zweiten Fluid-Kühlanordnung in dem sich axial erstreckenden Leistungselektronikträgerabschnitt, kann eine deutlich größere Kühlfläche bereitgestellt werden als beispielsweise durch eine als Kühlplatte ausgebildete Kondensatorbodenplatte, wie in der DE 101 20 414 beschrieben. Durch den ringförmigen Kanalabschnitt kann zudem der gesamte von dem Leistungselektronikträgerabschnitt ausgebildete zweite Aufnahmeraum gekühlt werden, so dass eine deutlich verbesserte Kühlung möglich ist.

Hinsichtlich der Ausbildung der Kühlmittelkanäle ist es auch möglich, einen zentralen Kühlmittelzufuhrkanal und Kühlmittelabfuhrkanal auszubilden, wodurch die Ausbildung des Radialwandabschnitts deutlich vereinfacht ist. So kann beispielsweise eine einteilig mit dem Kühlmittelkanal ausgebildete Rippe, eine Dichtung oder ein Einlegteil verwendet werden, um sowohl einen Kühlmittelzufuhrkanal als auch einen Kühlmittelabfuhrkanal auszubilden. Weiterhin kann auch im Bereich der beiden Kühlmittelkanäle ein Leitelement ausgebildet werden, durch dessen Formgebung die für die Kühlung notwendigen Ströme in die Kühlmittelkanäle eingeleitet bzw. eingeteilt werden können.

Da üblicherweise die Leistungselektronik einen höheren Kühlbedarf aufweist als die elektromagnetischen Statorkomponenten, ist es weiterhin vorteilhaft auch bei einer zentralen Kühlmittelzufuhr und -abfuhr zumindest die Zufuhrmenge des Kühlmittels zu der ersten und zweiten Fluid-Kühlanordnung zu steuern. Dazu kann beispielsweise eine Verbindung zwischen Kühlmittelkanal und zentralem Kühlmittelzufuhrkanal an die gewünschte Durchflussmenge angepasst werden. So kann beispielsweise der Durchmesser der Verbindung oder auch der gesamte Kühlmittelkanal im Statorträgerabschnitt von dem Leistungselektronikträgerabschnitt verschieden ausgebildet sein. Dadurch kann beispielsweise im Leistungselektronikträgerabschnitt mehr Kühlmittel bereitgestellt und dieses auch schneller durchgesetzt werden, so dass eine größere Wärmeabfuhrkapazität für den Leistungselektronikträgerabschnitt bereitsteht, als für den Statorträgerabschnitt. Durch diese sogenannte Parallelschaltung der Kühlmittelkanäle kann zudem der Gesamtdruckverlust im Kühlsystem des Systemträgers minimiert werden.

Alternativ kann auch vorgesehen sein, dass der Kühlmittelzufuhrkanal mit nur einem der beiden Kühlmittelkanäle, beispielsweise dem zweiten ringförmigen Kanalabschnitt, und der Kühlmittelabfuhrkanal mit dem anderen, beispielsweise dem ersten ringförmigen, Kanalabschnitt verbunden sind, wobei der erste Kanalabschnitt und der zweite Kanalabschnitt über einen, vorzugsweise im Radialwandabschnitt ausgebildeten Verbindungskanal, fluidisch miteinander verbunden sind. Durch diese sogenannte Reihenschaltung kann zudem gewährleistet werden, dass die Leistungselektronik immer zuerst mit der Zulauftemperatur gekühlt wird. Nach der Kühlung der Leistungselektronik wird dann das Kühlmittel nicht direkt in die Auslassöffnung geleitet, sondern in den Kühlmittelkanal des Statorträgerabschnitts transportiert, um die elektromagnetischen Statorkomponenten zu kühlen. Auch dadurch kann dafür gesorgt werden, dass bei der Leistungselektronik ein größerer Kühleffekt bereitgestellt wird. Selbstverständlich ist es auch möglich, mehr als nur zwei Fluid-Kühlanordnungen in Reihenschaltung oder Parallelschaltung miteinander zu versorgen. Zudem können auch Mischformen aus Parallel- und Reihenschaltung vorhanden sein.

Wie oben bereits erwähnt, kann durch die Anordnung des Leistungselektronikträgerabschnitts radial innerhalb des Rotors über den Kühlmittelkanal im Leistungselektronikträgerabschnitt nicht nur die Elektronikbaugruppe, sondern auch die elektromagnetischen Komponenten des Rotors gekühlt werden. Um diesen Kühleffekt zu vergrößern, kann, wie ein weiteres bevorzugtes Ausführungsbeispiel zeigt, zudem auf dem Rotorträger bzw. auf dem dem Rotor gegenüberliegenden Bereich des Leistungselektronikträgerabschnitts mindestens ein Luftleitelement angeordnet sein, das dazu ausgelegt ist, erwärmte Luft von den elektromagnetischen Rotorkomponenten an die zweite Fluid-Kühlanordnung zu leiten, wobei das mindestens eine Luftleitelement von dem Rotorträger und/oder dem Leistungselektronikträgerabschnitt getragen wird. Derartige Luftleitelemente können beispielsweise über eine Struktur in Form von Wellenschaufeln oder Vorsprüngen ausgebildet sein, die eine Luftzirkulation zwischen dem Rotorträger und dem Leistungselektronikträgerabschnitt ermöglichen. Dadurch wird aktiv erwärmte Luft an die zweite Fluid-Kühlanordnung gebracht, so dass auch die Abwärme der elektromagnetischen Rotorkomponenten besser abtransportiert werden kann.

Gemäß einem weiteren vorteilhaften Ausführungsbeispiel weist, wie oben schon bemerkt, die Antriebsvorrichtung radial innen einen zentralen Aufnahmeraum auf, der mittels eines dritten sich axial erstreckenden Systemträgerabschnitts oder des Leistungselektronikträgerabschnitts ausgebildet ist, und in dem eine Trennkupplung, insbesondere eine elektromagnetisch betätigbare Formschlusskupplung, z.B. ein Klauenkupplung, aufnehmbar ist. Dabei ist besonders bevorzugt, wenn der zentrale Aufnahmeraum fluiddicht abgeschlossen ist, wobei vorzugsweise der den zentralen Aufnahmeraum bildende axiale Systemträgerabschnitt auf einer axialen Seite dichtend mit einem seitlich des Systemträgers angeordneten Lagerschild und auf der anderen Seite dichtend mit einem den Rotorträger drehbar lagernden Lager abgeschlossen ist. Dadurch ist es möglich, den die Trennkupplung aufnehmenden Aufnahmeraum mit einem Schmier- oder Kühlmittel zu füllen, auch wenn die elektrische Maschine selbst in einem Trockenbereich angeordnet ist.

Weiterhin kann an dem Systemträger eine dritte Fluid-Kühlanordnung vorgesehen sein, die mit der Elektronikbaugruppe im Wärmeaustausch steht, wobei vorzugsweise die dritte Fluid-Kühlanordnung als ein im dritten axialen Abschnitt ausgebildeter dritter sich in Umfangsrichtung erstreckender ringförmiger Kanalabschnitt ausgebildet ist, der vorzugsweise radial innerhalb der Leistungselektronik angeordnet ist. Durch diese Ausgestaltung kann eine besonders effektive Kühlung der Leistungselektronik und der angrenzenden Bauteile, wie beispielsweise auch der Trennkupplung, bereitgestellt werden.
Die kühlmittelfluidische Versorgung kann dabei ebenfalls in Reihen- oder Parallelschaltung erfolgen. Es ist jedoch auch möglich, den zweiten und dritten Kühlmittelkanal parallel mit Kühlmittel zu versorgen, während der erste Kühlmittelkanal erst stromabwärts mit Kühlmittel versorgt wird (Reihenschaltung). Selbstverständlich kann auch ein separater Kühlmittelzulauf, -ablauf vorgesehen sein.
Weitere Vorteile und vorteilhafte Ausgestaltungen sind in der Beschreibung, den Ansprüchen und den Zeichnungen definiert.
Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.
Es zeigen:
Fig. 1 :eine schematische räumliche Schnittansicht durch ein bevorzugtes Ausführungsbeispiel vorliegender Antriebsvorrichtung und
Fig. 2: eine schematische Darstellung zweier unterschiedlicher Anordnungen von Kühlkanälen.

Im Folgenden werden gleiche und funktionell gleichwirkende Elemente mit denselben Bezugszeichen gekennzeichnet.

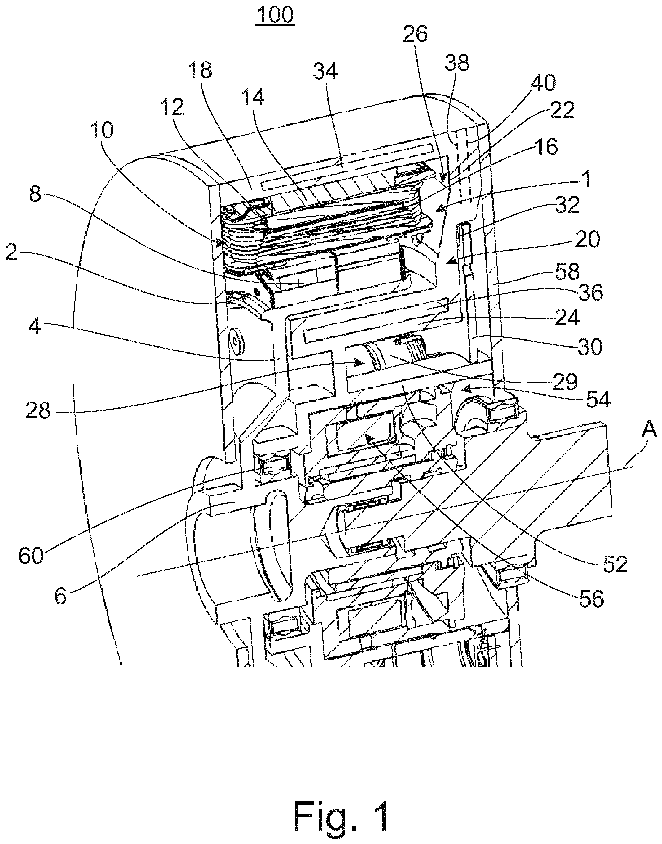

Fig. 1 zeigt schematisch eine räumliche Schnittansicht durch eine als elektrische Maschine 1 ausgebildete Antriebsvorrichtung 100 für einen Kraftfahrzeugantriebsstrang. Die elektrische Maschine 1 umfasst einen Rotor 2, der um eine Achse A drehbar gelagert ist und von einem Rotorträger 4, der drehfest mit einer Welle 6 verbunden ist, getragen ist. Auf dem Rotorträger 4 sind dabei die elektromagnetischen Rotorkomponenten 8 in Form von Rotormagneten angeordnet.

Radial außerhalb des Rotors 2 ist ein Stator 10 angeordnet, der elektromagnetische Statorkomponenten 12 in Form von an einem Blechpaket 14 angeordneten Spulen 16 aufweist. Dabei ist das Statorblechpaket 14 von einem Statorträger 18 getragen, der als Statorträgerabschnitt 18 eines Systemträgers 20 ausgebildet ist.

Wie Fig. 1 weiter zu entnehmen, weist der Systemträger 20 neben dem Statorträgerabschnitt 18 einen integral mit dem Statorträgerabschnitt 18 ausgebildeten Radialwandabschnitt 22 auf. Zudem ist einteilig an dem Systemträger 20 ein Leistungselektronikträgerabschnitt 24 ausgebildet, der radial beabstandet von dem Statorträger 18 ausgebildet ist. Dadurch bildet der Systemträger 20 einen topfartigen Aufnahmeraum 26, in dem die elektrische Maschine 1 zumindest teilweise aufgenommen ist, wobei der Leistungselektronikträgerabschnitt 24 in Bezug auf die Drehachse A radial innerhalb des Rotorträgers 4 angeordnet ist.

Weiterhin zeigt Fig. 1, dass der Leistungselektronikträgerabschnitt 24 radial innen einen zweiten Aufnahmeraum 28 ausbildet, in dem eine Elektronikbaugruppe, insbesondere ein Kondensator 29, einer die elektrische Maschine 1 steuernden Leistungselektronik aufnehmbar ist. Der Kondensator 29 und andere nicht explizit dargestellte Elektronikbauteile wiederum werden von einem sogenannten Powerboard 30, d.h. einer Netzteilplatte, getragen, die wiederum in einer an dem Radialwandabschnitt 22 ausgebildeten Ausnehmung 32 abgesenkt angeordnet sein kann. Das Powerboard 30 trägt dabei neben dem Kondensator 29 auch andere Bauteile, die in den Aufnahmeraum 28 hineinragen oder zwischen Powerboard 30 und Systemträger 20 angeordnet sind, wie beispielsweise diverse Halbleiter (MOSFETs). Zwischen Powerboard 30 bzw. den vom Powerboard 30 getragenen Elementen und dem Systemträger 20, insbesondere dem Radialwandbereich 22 bzw. dem Leistungselektronikträgerabschnitt 24, kann weiterhin eine Wärmeleitpaste (Gapfiller) vorgesehen sein, die die Elektronikbaugruppen in direkten thermischen Kontakt mit dem Systemträger 20 und damit mit am Systemträger 20, insbesondere am Statorträger bzw. Leistungselektronikträgerabschnitt 24, angeordnete Fluid-Kühlanordnungen 34, 36 bringt, die nachfolgend detailliert beschrieben werden.

Dabei zeigt Fig. 1, dass die Fluid-Kühlanordnungen 34, 36 sowohl im Statorträgerabschnitt 18 als auch im Leistungselektronikträgerabschnitt 24 als Kühlmittelkanäle 34, 36 ausgebildet sind, die mit einem fluiden Kühlmittel beaufschlagbar sind und für eine Kühlung der elektromagnetischen Statorkomponenten (Kühlmittelkanal 34) bzw. der Leistungselektronik (Kühlmittelkanal 36) ausgelegt sind. Dabei ist der erste Kühlmittelkanal 34 vorzugsweise ringförmig angeordnet und einteilig in dem Statorträgerabschnitt 18 ausgebildet. Alternativ ist es jedoch auch möglich, den Kühlmittelkanal radial innen durch den Statorträgerabschnitt 18 und radial außen durch ein, die elektrische Maschine 1 aufnehmendes Gehäuse zu begrenzen. Auch der zweite Kühlmittelkanal 36 ist, wie dargestellt, als ringförmiger Kühlmittelkanal ausgebildet und vorzugsweise mit einem fluiden Kühlmittel beaufschlagbar.

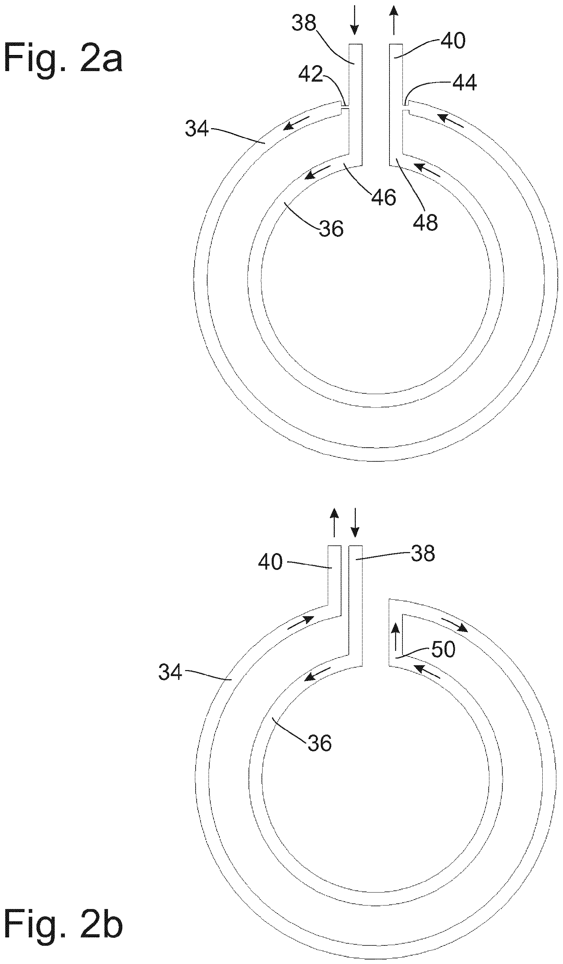

Um ein Kühlmittel in die Kühlkanäle 34, 36 zu leiten, sind weiterhin in dem Radialwandabschnitt 22 des Systemträgers 20 ein Kühlmittelzulaufkanal 38 und ein Kühlmittelablaufkanal 40 angeordnet, die den Kühlmittelkanal 34 und den Kühlmittelkanal 36 mit fluidem Kühlmittel versorgen. Da der Kühlmittelzulauf 38 und der Kühlmittelablauf 40 nicht in der Schnittebenenansicht der Fig. 1 liegen, sind diese nur gestrichelt angedeutet und als Konzept und nicht als tatsächliche Anordnung zu verstehen. Schematisch wird auf die Kühlmittelkanäle in Fig.2 näher eingegangen.

Dabei kann für jeden Kühlmittelkanal 34 oder 36 jeweils ein separater Zulaufkanal 38 bzw. Ablaufkanal 40 vorgesehen sein, es ist jedoch auch möglich, wie schematisch in Fig. 2 dargestellt, die Kühlmittelkanäle 34, 36 über einen zentralen Kühlmittelzufuhrkanal 38 und einen zentralen Kühlmittelabfuhrkanal 40 mit Kühlmittel zu versorgen. Dabei zeigt Fig. 2a eine Parallelschaltung, während Fig. 2b eine Reihenschaltung darstellt.

Bei der Parallelschaltung sind, wie Fig. 2a zu entnehmen, der Kühlmittelzufuhrkanal 38 und der Kühlmittelabfuhrkanal 40 jeweils sowohl mit dem ersten Kühlmittelkanal 34 im Statorträgerabschnitt 18 als auch mit dem zweiten Kühlmittelkanal 36 im Leistungselektronikträgerabschnitt 24 verbunden. Dadurch kann Kühlmittel gleichzeitig sowohl dem ersten als auch dem zweiten Kühlmittelkanal 34, 36 zugeführt bzw. aus diesem abgeführt werden. Um die Kühlmittelzufuhr/abfuhr zu steuern bzw. einem unterschiedlichen Kühlbedarf des vom ersten oder zweiten Kühlmittelkanals 34, 36 gekühlten Elementen Rechnung zu tragen, kann die Zufuhr von Kühlmittel über den Durchmesser der Verbindungen 42, 44 bzw. 46, 48 bereitgestellt werden. Dabei kann beispielsweise ein Durchschnitt der Verbindung 42, 44 zum Kühlmittelkanal 34 kleiner ausgebildet als ein Durchschnitt der Verbindung 46, 48 zum Kühlmittelkanal 36. Über die unterschiedlichen Durchmesser der Verbindungen 42, 44, 46 und 48 kann dabei die Durchflussmenge und auch die Durchflussgeschwindigkeit des Kühlmittels in den Kühlmittelkanälen 34, 36 eingestellt und geregelt werden.

Zudem kann vorgesehen sein, dass die Kühlmittelzufuhr aktiv geregelt wird, beispielsweise über entsprechende Durchflussventile, die den Durchfluss des Kühlmittels in die Kanäle 34, 36 aktiv steuern. Gleichermaßen ist eine passive Durchflussmengensteuerung über Leitelemente in den Kanälen 38, 40 ebenfalls möglich.

Alternativ zu der in Fig. 2a dargestellten Parallelschaltung ist auch eine Reihenschaltung, wie in Fig. 2b dargestellt, möglich. Das bedeutet, dass die Kühlkanäle 34, 36 nicht gleichzeitig mit Kühlmittel beaufschlagt werden, sondern sequenziell. Dazu ist beispielsweise der Kühlmittelkanal 36 des Leistungselektronikträgerabschnitts 24 direkt mit dem Kühlmittelzufluss 38 verbunden, so dass Kühlmittel nur in den Kühlmittelkanal 36 des Leistungselektronikträgerabschnitts 24 eintreten kann. Die Kühlmittelkanäle 36 und 34 wiederum sind über einen Verbindungskanal 50 miteinander verbunden, so dass Kühlmittel, nachdem es durch den Kühlmittelkanal 36 des Leistungselektronikträgerabschnitts 24 geflossen ist, nicht nach außen abgeführt wird, sondern in den Kühlmittelkanal 34 des Statorträgerabschnitts 18 eingebracht wird und dann von dort aus über den Kühlmittelabfluss 40 nach außen abgeführt wird. Dabei kann vorzugsweise der Verbindungskanal 50 ebenfalls wie der Kühlmittelzufuhrkanal 38 und der Kühlmittelabfuhrkanal 40 in dem Radialwandabschnitt 22 des Systemträgers 20 ausgebildet sein.

Selbstverständlich ist ebenfalls möglich, jeden Kühlmittelkanal 34; 36 jeweils mit einem separaten Kühlmittelzufuhrkanal 38 bzw. Kühlmittelabfuhrkanal 40 zu versorgen. Dies hat den Vorteil, dass dann Kühlmittel unterschiedlicher Temperatur an die entsprechend zu kühlenden Elemente gebracht werden kann.

Wie Fig. 1 weiterhin zu entnehmen, ist der Kühlmittelkanal 36 des Leistungselektronikträgerabschnitts 24 nicht nur dazu ausgelegt, eine Elektronikbaugruppe zu kühlen, sondern kann gleichzeitig eine Kühlung des Rotors 2 bereitstellen. Um diese Kühlung weiter zu erhöhen, kann weiterhin auf dem Rotorträger 4 bzw. auf dem dem Rotorträger 4 gegenüberliegenden Bereich des Leistungselektronikträgerabschnitts 24 eine Struktur (nicht dargestellt) in Form von Wellen, Schaufeln oder Vorsprüngen ausgebildet sein, die eine Luftzirkulation zwischen dem Rotorträger und dem Leistungselektronikträger ermöglicht. Dadurch kann die Wärmeübertragung vom Rotor über die Luft an den Kühlmittelkanal 36 des Leistungselektronikträgerabschnitts 24 erfolgen und so eine Kühlung der elektromagnetischen Rotorkomponenten 8 bereitgestellt werden.

Die Kühlung der elektromagnetischen Statorkomponenten 12 bzw. der Leistungselektronik erfolgt ebenfalls über Wärmeaustauschkontakt. Dabei kann im Bereich der Leistungselektronik der Wärmeaustausch über die oben angesprochenen Gapfiller weiter erhöht werden. Zudem kann der Systemträger selbst aus einem wärmeleitfähigen Material, wie beispielsweise Alu, ausgebildet sein, was dem Wärmeaustausch zwischen den Kühlkanälen 34, 36 und den zu kühlenden Elementen 12, 29, 30 erhöht.

Weiterhin zeigt Fig. 1, dass radial innerhalb des Leistungselektronikträgerabschnitts 24 der Systemträger 20 einen dritten Systemträgerabschnitt 52 aufweisen kann, der sich ebenfalls axial erstreckt und einen dritten ringförmigen Aufnahmeraum 54 definiert, der gleichzeitig eine Zentralausnehmung darstellt und dazu ausgelegt sein kann, eine Trennkupplung 56 aufzunehmen. Die Trennkupplung 56 kann, wie in Fig. 1 dargestellt, als elektromagnetisch betätigbar Formschlusskupplung, insbesondere als Klauenkupplung, ausgebildet sein. Deren Elemente und Funktionsweise sind in der DE 102013205174 genau dargelegt.

Der dritte Systemträgerabschnitt 52 erstreckt sich axial von einem ersten Lagerschild 58, das seitlich des Systemträgers 20 angeordnet ist und mit diesem radial außen abschließt, zu einem Lager 60, das wiederum den Rotorträger 4 drehend lagert. Dabei ist der dritte Systemträgerabschnitt 52 dichtend sowohl an dem Lagerschild 58 als auch an dem Lager 60 abgeschlossen, so dass der Aufnahmeraum 54 im Wesentlichen fluiddicht abgeschlossen ist. Dadurch kann in dem Aufnahmeraum 54 auch Schmier- oder Kühlmittel für die Trennkupplung 56 aufgenommen werden, ohne dass auch die elektrische Maschine 1 in einem Nassraum angeordnet werden muss.
Um die Kühleffektivität, insbesondere für die Leistungselektronik zu erhöhen, kann weiterhin in dem dritten Systemabschnitt 52 ebenfalls ein Kühlmittelkanal (nicht dargestellt) vorgesehen sein, der mit Kühlmittel beaufschlagbar ist, und so für eine Kühlung der in dem Aufnahmeraum 28 angeordneten Elektronikbaugruppe und des Powerboards 30 dient.
Auch wenn in Fig. 1 die elektrische Maschine 1 als ein Innenläufer dargestellt ist, so ist der Systemträger 20 auch für elektrische Maschinen und Antriebsaggregate in Außenläuferbauform gleichermaßen geeignet. Auch hier ist eine effektive Kühlung gegeben.
Insgesamt kann mit dem oben beschriebenen Systemträger eine Antriebsvorrichtung vorgestellt werden, die eine verbesserte Kühlung sowohl der elektromagnetischen Komponenten der elektrischen Maschine als auch der Elektronikbauteile der Leistungselektronik aufweist.

### Bezugszeichen

- 100: Antriebseinheit
- 1: elektrische Maschine
- 2: Rotor
- 4: Rotorträger
- 6: Welle
- 8: elektromagnetische Rotorkomponenten
- 10: Stator
- 12: elektromagnetische Statorkomponenten
- 14: Zähne
- 16: Spulen
- 18: Statorträger
- 20: Systemträger
- 22: Radialwandabschnitt
- 24: Leistungselektronikträgerabschnitt
- 26: erster Aufnahmeraum
- 28: zweiter Aufnahmeraum
- 29: Kondensator
- 30: Leistungselektronik-Powerboard
- 32: Ausnehmung
- 34: erster Kühlmittelkanal
- 36: zweiter Kühlmittelkanal
- 38: Kühlmittelzulauf
- 40: Kühlmittelablaufkanal
- 42, 44, 46, 48: Verbindungselemente
- 50: Verbindungskanal
- 52: dritter Systemträgerabschnitt
- 54: dritter Aufnahmebereich
- 56: Trennelement
- 58: Lagerschild
- 60: Lager

## Patentansprüche

1. Antriebsvorrichtung (100) für einen Kraftfahrzeugantriebsstrang, umfassend
- eine elektrische Maschine (1) mit einem um eine Achse (A) drehbar gelagerten Rotor (2) und einem dazu koaxial angeordneten Stator (10), wobei
- der Rotor (2) eine elektromagnetische Rotorkomponente (8) und einen Rotorträger (4) aufweist und
- der Stator (10) einen Statorträger (18) aufweist, der rotorseitig eine elektromagnetische Statorkomponente (12) trägt,
**dadurch gekennzeichnet, dass**
- ein zylinderförmig und einteilig ausgebildeter Systemträger (20) vorgesehen ist, der
- einen ersten zylinderförmigen und sich axial erstreckenden Statorträgerabschnitt (18) aufweist, welcher den Statorträger (18) ausbildet, und der
- zumindest einen zweiten zylinderförmigen und sich axial erstreckenden Leistungselektronikträgerabschnitt (24) aufweist, der einteilig an dem Systemträger (20) ausgebildet und koaxial und radial beabstandet zu dem ersten zylinderförmigen Statorträgerabschnitt (18) angeordnet ist und welcher einen Aufnahmebereich (28) für eine Elektronikbaugruppe (29; 30) zum Ansteuern der elektrischen Maschine ausbildet, und wobei
- der Systemträger (20) einen sich radial erstreckenden Radialwandabschnitt (22) umfasst, welcher den Statorträgerabschnitt (18) und den Leistungselektronikträgerabschnitt (24) miteinander verbindet und wobei der Systemträger (20) weiterhin
- eine erste am Statorträgerabschnitt (18) angeordnete Fluid-Kühlanordnung (34) aufweist, welche mit der elektromagnetischen Statorkomponente (12) im Wärmeaustauschkontakt steht, und zumindest
- eine zweite, von der ersten Fluid-Kühlanordnung (34) separat ausgebildete, am Leistungselektronikträgerabschnitt (24) angeordnete Fluid-Kühlanordnung (36) aufweist, die mit der Elektronikbaugruppe (29; 30) im Wärmeaustausch steht, wobei
- die elektrische Maschine (1) als Innenläufer ausgeführt ist, bei welcher der Rotor (2) und Stator (10) in einem am Systemträger (20) zwischen dem Statorträgerabschnitt (18) und dem Leistungselektronikträgerabschnitt (24) ausgebildeten ringförmigen ersten Aufnahmeraum (26) angeordnet sind und wobei
- in dem Radialwandabschnitt (22) des Systemträgers (20) mindestens ein Kühlmittelzufuhrkanal (38), der Kühlmittel der ersten und/oder zweiten Fluid-Kühlanordnung (34; 36) zuführt, und mindestens ein Kühlmittelabfuhrkanal (40), der Kühlmittel aus der ersten und/oder zweiten Fluid-Kühlanordnung (34; 36) abführt, ausgebildet sind.

2. Antriebsvorrichtung (100) nach Anspruch 1, wobei der Aufnahmeraum (28) für die Elektronikbaugruppe (29; 30), insbesondere für einen Kondensator (29), als zweiter ringförmiger Aufnahmeraum (28) ausgebildet ist, der radial innerhalb des Leistungselektronikträgerabschnitts (24) ausgebildet ist.

3. Antriebsvorrichtung (100) nach Anspruch 2, **dadurch gekennzeichnet, dass** der Aufnahmeraum (28) für die Elektronikbaugruppen (29; 30) weiterhin eine in dem Radialwandabschnitt (22) auf einer der elektrischen Maschine (1) abgewandten axialen Stirnseite ausgebildete Ausnehmung (32) aufweist, in der ein Powerboard (30) für die Leistungselektronik aufnehmbar ist.

4. Antriebsvorrichtung (100) nach einem der vorhergehenden Ansprüche, **dadurch gekennzeichnet, dass** die erste Fluid-Kühlanordnung (34) als ein im Statorträgerabschnitt (18) ausgebildeter, erster sich in Umfangsrichtung erstreckender ringförmiger Kanalabschnitt (34) ausgebildet ist, der vorzugsweise radial außerhalb der elektromagnetischen Statorkomponenten (12) angeordnet ist.

5. Antriebsvorrichtung (100) nach einem der vorhergehenden Ansprüche, **dadurch gekennzeichnet, dass** die zweite Fluid-Kühlanordnung (36) als ein im Leistungselektronikträgerabschnitt (24) ausgebildeter, zweiter sich in Umfangsrichtung erstreckender ringförmiger Kanalabschnitt (34) ausgebildet ist, der vorzugsweise radial zwischen der elektrischen Maschine (1) und der aufgenommenen Elektronikbaugruppe (29; 30) angeordnet ist.

6. Antriebsvorrichtung (100) nach einem der vorhergehenden Ansprüche, **dadurch gekennzeichnet, dass** der Kühlmittelzufuhrkanal (38) und der Kühlmittelabfuhrkanal (40) zumindest jeweils mit dem ersten ringförmigen Kanalabschnitt (34) und dem zweiten ringförmigen Kanalabschnitt (36) verbunden sind.

7. Antriebsvorrichtung (100) nach einem der vorhergehenden Ansprüche, **dadurch gekennzeichnet, dass** der Kühlmittelzufuhrkanal (38) zumindest mit einem insbesondere dem zweiten ringförmigen Kanalabschnitt (36) und der Kühlmittelabfuhrkanal (40) mit dem anderen, insbesondere dem ersten, ringförmigen Kanalabschnitt (34) verbunden sind, und wobei zumindest der erste Kanalabschnitt (34) und der zweite Kanalabschnitt (36) über einen, vorzugsweise im Radialwandabschnitt (22) ausgebildeten, Verbindungskanal (50) fluidisch miteinander verbunden sind.

8. Antriebsvorrichtung (100) nach einem der vorhergehenden Ansprüche, **dadurch gekennzeichnet, dass** eine Durchflussmenge von Kühlmittel in den Fluid-Kühlanordnungen (34; 36) und/oder den Kühlmittelkanälen über entsprechend ausgebildete Querschnitte (42; 44; 46; 48) einstellbar ist.

9. Antriebsvorrichtung (100) nach einem der vorhergehenden Ansprüche, **dadurch gekennzeichnet, dass** zwischen Rotorträger (4) und Leistungselektronikträgerabschnitt (24) mindestens ein Luftleitelement angeordnet ist, das dazu ausgelegt ist, erwärmte Luft von den elektromagnetischen Rotorkomponenten (8) an die zweite Fluid-Kühlanordnung (36) zu leiten, wobei das mindestens eine Luftleitelement von dem Rotorträger (4) und/oder dem Leistungselektronikträger (24) getragen ist.

10. Antriebsvorrichtung (100) nach einem der vorhergehenden Ansprüche, **dadurch gekennzeichnet, dass** der Leistungselektronikträgerabschnitt (24) oder ein weiterer, dritter, radial innerhalb des Leistungselektronikträgerabschnitts (24) ausgebildeter sich axial erstreckender Systemträgerabschnitt (52) einen radial innenliegenden zentralen Aufnahmeraum (54) definiert, in der eine Trennkupplung (56), insbesondere eine elektromagnetisch betätigbare Formschlusskupplung, aufnehmbar ist.

11. Antriebsvorrichtung (100) nach Anspruch 10, wobei der zentrale Aufnahmeraum (54) fluiddicht abgeschlossen ist, wobei vorzugsweise der den zentralen Aufnahmeraum (54) bildende axiale Systemträgerabschnitt (24; 52) auf einer axialen Seite dichtend mit einem seitlich des Systemträgers (20) angeordneten Lagerschild (58) abschließt und auf der anderen Seite dichtend zu einem den Rotorträger (4) drehbar lagernden Lager (60) abgeschlossen ist.

12. Antriebsvorrichtung (100) nach einem der vorhergehenden Ansprüche, **dadurch gekennzeichnet, dass** an dem Systemträger (20) eine dritte Fluid-Kühlanordnung vorgesehen ist, die mit der Elektronikbaugruppe (29; 30) im Wärmeaustausch steht, wobei vorzugsweise die dritte Fluid-Kühlanordnung als ein im dritten axialen Systemträgerabschnitt (52) ausgebildeter, dritter sich in Umfangsrichtung erstreckender ringförmiger Kanalabschnitt ausgebildet ist, der vorzugsweise radial innerhalb der Elektronikbaugruppe (29; 30) angeordnet ist.

## Claims

1. Drive apparatus (100) for a motor vehicle drive train, comprising
- an electrical machine (1) having a rotor (2), which is mounted such that it can rotate about an axis (A), and a stator (10), which is arranged coaxially in relation to the said rotor, wherein
- the rotor (2) has an electromagnetic rotor component (8) and a rotor support (4), and
- the stator (10) has a stator support (18) which, on the rotor side, supports an electromagnetic stator component (12),
**characterized in that**
- a system support (20) of cylindrical and integral design is provided, which
- has a first cylindrical and axially extending stator support section (18) which forms the stator support (18), and which
- has at least one second cylindrical and axially extending power electronics support section (24) which is integrally formed on the system support (20) and is arranged coaxially and radially at a distance from the first cylindrical stator support section (18) and which forms a holding region (28) for an electronics assembly (29; 30) for actuating the electrical machine, and wherein
- the system support (20) comprises a radially extending radial wall section (22) which connects the stator support section (18) and the power electronics support section (24) to one another and wherein the system support (20) further has
- a first fluid cooling arrangement (34) which is arranged on the stator support section (18) and is in contact with the electromagnetic stator component (12) so as to exchange heat, and has at least
- one second fluid cooling arrangement (36) which is formed separately from the first fluid cooling arrangement (34) and is arranged on the power electronics support section (24) and exchanges heat with the electronics assembly (29; 30), wherein
- the electrical machine (1) is designed as an internal rotor, in which the rotor (2) and the stator (10) are arranged in an annular first holding space (26) which is formed on the system support (20) between the stator support section (18) and the power electronics support section (24), and wherein
- at least one coolant supply channel (38), which supplies coolant to the first and/or second fluid cooling arrangement (34; 36), and at least one coolant discharge channel (40), which discharges coolant from the first and/or second fluid cooling arrangement (34; 36), are formed in the radial wall section (22) of the system support (20).

2. Drive apparatus (100) according to Claim 1, wherein the holding space (28) for the electronics assembly (29; 30), in particular for a capacitor (29), is designed as a second annular holding space (28) which is formed radially within the power electronics support section (24).

3. Drive apparatus (100) according to Claim 2, **characterized in that** the holding space (28) for the electronics assemblies (29; 30) further has a recess (32) which is formed in the radial wall section (22) on an axial end side which is averted from the electrical machine (1), it being possible for a power board (30) for the power electronics to be held in the said recess.

4. Drive apparatus (100) according to one of the preceding claims, **characterized in that** the first fluid cooling arrangement (34) is designed as a first annular channel section (34) which is formed in the stator support section (18) and extends in the circumferential direction and is preferably arranged radially outside the electromagnetic stator components (12).

5. Drive apparatus (100) according to one of the preceding claims, **characterized in that** the second fluid cooling arrangement (36) is designed as a second annular channel section (34) which is formed in the power electronics support section (24) and extends in the circumferential direction and is preferably arranged radially between the electrical machine (1) and the held electronics assembly (29; 30).

6. Drive apparatus (100) according to one of the preceding claims, **characterized in that** the coolant supply channel (38) and the coolant discharge channel (40) are each connected at least to the first annular channel section (34) and the second annular channel section (36).

7. Drive apparatus (100) according to one of the preceding claims, **characterized in that** the coolant supply channel (38) is connected at least to one, in particular the second, annular channel section (36), and the coolant discharge channel (40) is connected to the other, in particular the first, annular channel section (34), and wherein at least the first channel section (34) and the second channel section (36) are fluidically connected to one another by means of a connecting channel (50) which is preferably formed in the radial wall section (22).

8. Drive apparatus (100) according to one of the preceding claims, **characterized in that** a throughflow quantity of coolant into the fluid cooling arrangements (34; 36) and/or the coolant channels can be adjusted by means of correspondingly designed cross sections (42; 44; 46; 48).

9. Drive apparatus (100) according to one of the preceding claims, **characterized in that** at least one air guide element is arranged between the rotor support (4) and the power electronics support section (24), which air guide element is designed to guide heated air from the electromagnetic rotor components (8) to the second fluid cooling arrangement (36), wherein the at least one air guide element is supported by the rotor support (4) and/or the power electronics support (24).

10. Drive apparatus (100) according to one of the preceding claims, **characterized in that** the power electronics support section (24) or a further, third axially extending system support section (52) which is formed radially within the power electronics support section (24) defines a radially inner central holding space (54) in which a separating clutch (56), in particular an electromagnetically operable positive-locking clutch, can be held.

11. Drive apparatus (100) according to Claim 10, wherein the central holding space (54) is closed off in a fluid-tight manner, wherein preferably the axial system support section (24; 52), which forms the central holding space (54), is closed off on an axial side in a sealing manner by an end plate (58) which is arranged laterally on the system support (20) and is closed off on the other side in a sealing manner in relation to a bearing (60) which rotatably supports the rotor support (4).

12. Drive apparatus (100) according to one of the preceding claims, **characterized in that** a third fluid cooling arrangement is provided on the system support (20) and exchanges heat with the electronics assembly (29; 30), wherein the third fluid cooling arrangement is preferably designed as a third annular channel section which is formed in the third axial system support section (52) and extends in the circumferential direction and is preferably arranged radially within the electronics assembly (29; 30).

## Revendications

1. Dispositif d'entraînement (100) pour une chaîne cinématique d'un véhicule automobile, comprenant
- une machine électrique (1) avec un rotor (2) supporté de manière à pouvoir tourner autour d'un axe (A) et un stator (10) disposé coaxialement à celui-ci,
- le rotor (2) présentant un composant de rotor électromagnétique (8) et un support de rotor (4) et
- le stator (10) présentant un support de stator (18) qui porte un composant de stator électromagnétique (12) du côté du rotor, **caractérisé en ce**
- **qu'**il est prévu un support de système (20) réalisé sous forme cylindrique et d'une seule pièce, qui
- présente une première portion de support de stator (18) de forme cylindrique et s'étendant axialement, qui constitue le support de stator (18), et qui
- présente au moins une deuxième portion de support d'électronique de puissance (24) de forme cylindrique et s'étendant axialement, qui est réalisée d'une seule pièce sur le support de système (20) et qui est disposée coaxialement et radialement à distance de la première portion de support de stator (18) de forme cylindrique, et qui constitue une région de réception (28) pour un module électronique (29 ; 30) pour commander la machine électronique, et
- le support de système (20) comprenant une portion de paroi radiale (22) s'étendant radialement qui relie l'une à l'autre la portion de support de stator (18) et la portion d'écoulement de puissance (24) et le support de système (20) présentant en outre
- un premier agencement de refroidissement par fluide (34) disposé au niveau de la portion de support de stator (18), qui est en contact d'échange thermique avec le composant de stator électromagnétique (12), et au moins
- un deuxième agencement de refroidissement par fluide (36) disposé sur la portion de support d'électronique de puissance (24), réalisé de manière séparée du premier agencement de refroidissement par fluide (34), qui est en échange thermique avec le module électronique (29 ; 30),
- la machine électrique (1) étant réalisée sous forme d'induit intérieur dans lequel le rotor (2) et le stator (10) sont disposés dans un premier espace de réception (26) de forme annulaire réalisé au niveau du support de système (20) entre la portion de support de stator (18) et la portion de support d'électronique de puissance (24) et
- au moins un canal d'alimentation en réfrigérant (38), qui achemine du réfrigérant au premier et/ou au deuxième agencement de refroidissement par fluide (34 ; 36), et au moins un canal d'évacuation de réfrigérant (40), qui évacue du réfrigérant hors du premier et/ou du deuxième agencement de refroidissement par fluide (34 ; 36), étant réalisés dans la portion de paroi radiale (22) du support de système (20).

2. Dispositif d'entraînement (100) selon la revendication 1, dans lequel l'espace de réception (28) pour le module électronique (29 ; 30), en particulier pour un condensateur (29), est réalisé sous forme de deuxième espace de réception de forme annulaire (28), qui est réalisé radialement à l'intérieur de la portion de support d'électronique de puissance (24).

3. Dispositif d'entraînement (100) selon la revendication 2, **caractérisé en ce que** l'espace de réception (28) pour les modules électroniques (29 ; 30) présente en outre un évidement (32) réalisé dans la portion de paroi radiale (22) sur un côté frontale axial opposé à la machine électrique (1), dans lequel peut être reçue une carte d'alimentation (Powerboard) (30) pour l'électronique de puissance.

4. Dispositif d'entraînement (100) selon l'une quelconque des revendications précédentes, **caractérisé en ce que** le premier agencement de refroidissement par fluide (34) est réalisé sous forme de première portion de canal annulaire (34) s'étendant dans la direction périphérique, réalisée dans la portion de support de stator (18), qui est de préférence disposée radialement à l'extérieur du composant de stator électromagnétique (12).

5. Dispositif d'entraînement (100) selon l'une quelconque des revendications précédentes, **caractérisé en ce que** le deuxième agencement de refroidissement par fluide (36) est réalisé sous forme de deuxième portion de canal annulaire (34) s'étendant dans la direction périphérique, réalisée dans la portion de support d'électronique de puissance (24), qui est de préférence disposée radialement entre la machine électrique (1) et le module électronique reçu (29 ; 30).

6. Dispositif d'entraînement (100) selon l'une quelconque des revendications précédentes, **caractérisé en ce que** le canal d'alimentation en réfrigérant (38) et le canal d'évacuation de réfrigérant (40) sont connectés au moins à chaque fois à la première portion de canal annulaire (34) et à la deuxième portion de canal annulaire (36).

7. Dispositif d'entraînement (100) selon l'une quelconque des revendications précédentes, **caractérisé en ce que** le canal d'alimentation en réfrigérant (38) est connecté au moins à une, en particulier la deuxième, portion de canal annulaire (36) et le canal d'évacuation de réfrigérant (40) est connecté à l'autre, en particulier la première portion de canal annulaire (34), et au moins la première portion de canal (34) et la deuxième portion de canal (36) sont connectées fluidiquement l'une à l'autre par le biais d'un canal de liaison (50) réalisé de préférence dans la portion de paroi radiale (22).

8. Dispositif d'entraînement (100) selon l'une quelconque des revendications précédentes, **caractérisé en ce qu'**une quantité de débit de réfrigérant dans les agencements de refroidissement par fluide (34 ; 36) et/ou dans les canaux de réfrigérant peut être ajustée par le biais de sections transversales réalisées de manière correspondante (42 ; 44 ; 46 ; 48).

9. Dispositif d'entraînement (100) selon l'une quelconque des revendications précédentes, **caractérisé en ce qu'**entre le support de rotor (4) et la portion de support d'électronique de puissance (24) est disposé au moins un élément de guidage d'air qui est conçu pour guider de l'air chauffé depuis les composants de rotor électromagnétiques (8) jusqu'au deuxième agencement de refroidissement par fluide (36), l'au moins un élément de guidage d'air étant supporté par le support de rotor (4) et/ou le support d'électronique de puissance (24).

10. Dispositif d'entraînement (100) selon l'une quelconque des revendications précédentes, **caractérisé en ce que** la portion de support d'électronique de puissance (24) ou une autre, troisième, portion de support de système (52) s'étendant axialement, réalisée radialement à l'intérieur de la portion de support d'électronique de puissance (24), définit un espace de réception central (54) situé radialement à l'intérieur, dans lequel peut être reçu un embrayage de séparation (56), en particulier un embrayage à engagement positif pouvant être actionné électromagnétiquement.

11. Dispositif d'entraînement (100) selon la revendication 10, dans lequel l'espace de réception central (54) est fermé de manière étanche aux fluides, la portion axiale de support de système (24 ; 52) formant l'espace de réception central (54) étant fermée de préférence sur un côté axial de manière hermétique avec un flasque de palier (58) disposé latéralement par rapport au support de système (20), et étant fermée de l'autre côté de manière hermétique par rapport à un palier (60) supportant à rotation le support de rotor (4).

12. Dispositif d'entraînement (100) selon l'une quelconque des revendications précédentes, **caractérisé en ce qu'**un troisième agencement de refroidissement par fluide est prévu au niveau du support de système (20), lequel est en échange thermique avec le module électronique (29 ; 30), le troisième agencement de refroidissement par fluide étant réalisé de préférence sous forme de troisième portion de canal annulaire s'étendant dans la direction périphérique, réalisé dans la troisième portion de support de système axiale (52), qui est disposée de préférence radialement à l'intérieur du module électronique (29 ; 30).
